# EUROPEAN PATENT SPECIFICATION

(11) **EP 2 019 612 B1**
(45) Date of publication and mention of the grant of the patent: **25.01.2012**
(21) Application number: 07761198.6
(22) Date of filing: 24.04.2007
(51) Int. Cl.: A47J 31/06, B65D 85/804

(54) **COFFEE AND TEA POD**
KAFFEE- UND TEEPAD
FILTRE À CAFÉ ET À THÉ

(30) Priority: 17.05.2006 US 383804
(43) Date of publication of application: 04.02.2009
(73) Proprietor: THE COCA-COLA COMPANY, Atlanta GA 30313 (US)
(72) Inventor: KIRSCHNER, Jonathan, Powder Springs, GA 30127 (US)
(74) Representative: Jackson, Robert Patrick
(86) International application number: PCT/US2007/067308
(87) International publication number: WO 2007/136958

(56) References cited:
- EP-A1- 1 500 358

## Description

The present application relates generally to a container for brewing material and more particularly relates to a pod for use in the automatic brewing of coffee, tea, and other beverages.

Various types of automatic coffee and tea dispensers are known. Generally described, these dispensers hold a measure of ground coffee, tealeaves, or other type of brewable material in a container of some sort. Hot water generally is added to the material so as to brew the beverage. The material is generally held in some sort of disposable container that must be opened or penetrated so as to allow the hot water to pass therethrough.

One drawback with these known brewing devices, however, is that the elements of the device that come into contact with the brewing material generally must be cleaned. Further, the container for the material must be inserted and aligned in the dispenser for each beverage. As a result, the beverage dispenser as a whole may be somewhat slow between beverage cycles as the container is inserted, aligned, removed and/or the dispenser elements are cleaned.

There is a desire, therefore, for a device that brews a beverage with a quick cycle time. The device preferably should be relatively inexpensive and easy to use and produce a high quality beverage. Likewise, the device preferably should be adaptable for different types of brewing or mixing materials and amounts.

WO 2006/030461 describes a pod having a side wall and a base positioned about the side wall, wherein the base comprises an aperture and a plurality of cusps for perforating a sealing film of the pod_{.}

The present application thus describes a pod as defined in claim 1, for mixing an amount of a tacky material and water. The pod includes a sidewall and a base positioned about the sidewall. The base includes a number of apertures and a number of spikes. The spikes include a top point of about three (3) to about fifteen (15) degrees.

The number of spikes may include 15 to 35 spikes. The spikes may include a height of about 5.1 to about 8.9 millimeters (about 0.2 to about 0.35 inches). The pod further may include a layer of filter paper positioned about the spikes such that the spikes puncture the layer of filter paper without letting the tacky material therethrough.

Preferred embodiments of the invention will now be described, by way of example only, and with reference to the accompanying drawings, in which:
Fig. 1 is a perspective view of one embodiment of a beverage dispenser system for use with a pod as is described herein.
Fig. 2 is a top plan view of the beverage dispenser system of Fig. 1.
Fig. 3 is a perspective view of a turret system of the beverage dispenser system of Fig. 1.
Fig. 4 is a perspective view of an injector assembly of the beverage dispenser system of Fig. 1, with the guide wheels and the return spring of the support plate shown in phantom lines.
Fig. 5 is a rear perspective view of the injector assembly of the beverage dispenser system of Fig. 1, with the idler wheel and the limit switch shown in a cut away view.
Fig. 6 is a side cross-sectional view of a configuration of brewing material for use with a pod as is described herein.
Fig. 7 is a side cross-sectional view of an alternative configuration of brewing material for use with a pod as is described herein.
Fig. 8 is a top perspective view of a pod illustrating features of the present application.
Fig. 9 is a bottom perspective view of the pod of Fig. 8.
Fig. 10 is a side plan view of the pod of Fig. 8.
Fig. 11 is a bottom plan view of the pod of Fig. 8.
Fig. 12 is a side cross-sectional view of the pod of Fig 8.
Fig. 13 is a side cross-sectional view of the lip of the pod of Fig. 8.
Fig. 14 is a side cross-sectional view of an alternative embodiment of a pod with a lid thereon
Fig. 15 is a side cross-sectional view of the interior wall of the pod of Fig. 14
Fig. 16 is a perspective view of an embodiment of a spiked pod.
Fig. 17 is a top plan view of the pod of Fig. 16.
Fig. 18 is a side cross-sectional view of the pod of Fig. 16.
Fig. 19 is a perspective view of a spike used in the pod of Fig. 16.
Fig. 20 is a perspective view of an embodiment of a pod of the present invention, a spiked pod.
Fig. 21 is a perspective view of a pod which does not form part of the claimed invention, a concentric ring pod.
Fig. 22 is a perspective view of a pod which does not form part of the claimed invention, a platform pod.

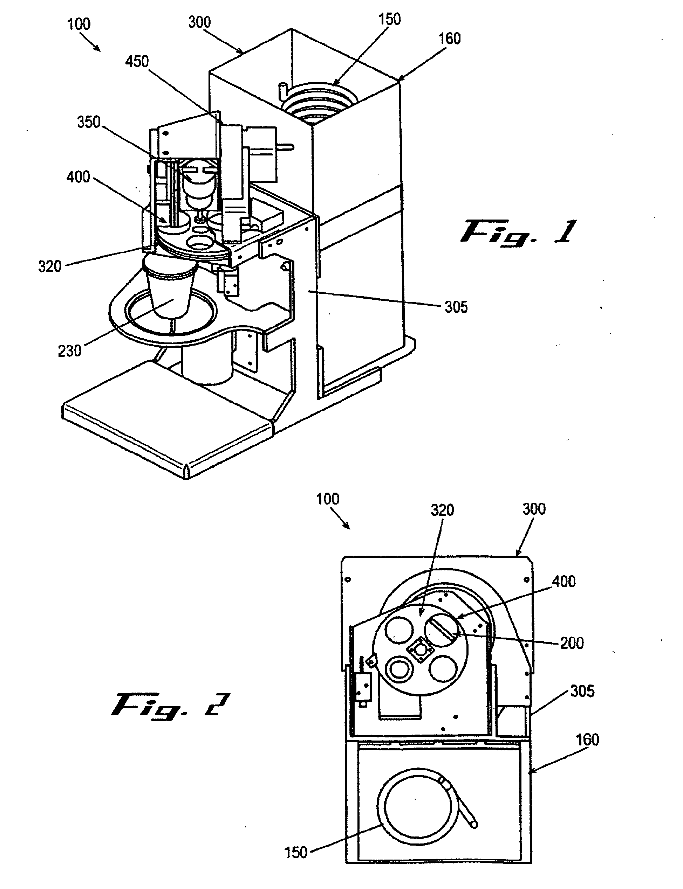

Referring now to the drawings, in which like numerals refer to like elements throughout the several views, Figs. 1 and 2 show one example of a beverage dispenser system **100.** In these figures, a pod brewing apparatus **300** is shown. The pod brewing apparatus **300** may include a heat exchanger **150** positioned within a hot water reservoir **160** and in communication with an injection nozzle **200** as is shown. In this embodiment, the elements of the beverage dispenser system **100** as a whole are mounted onto a dispenser frame **305.** The dispenser frame **305** may be made out of stainless steel, aluminum, other types of metals, or other types of substantially noncorrosive materials.

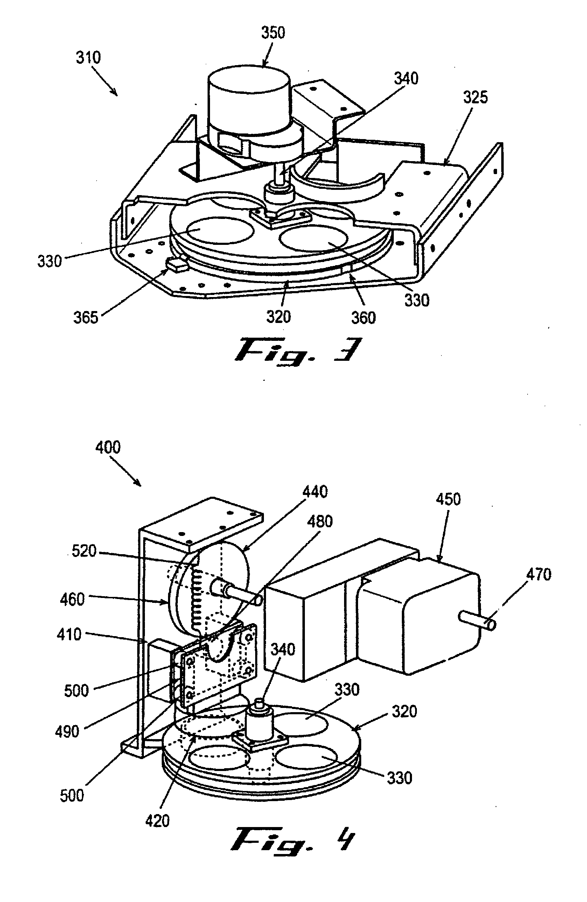

The injection nozzle **200** may interact with one or more pod cartridges **210** so as to produce the desired beverage in a cup **230** or any other type of receptacle. The pod cartridges **210** may be positioned in the beverage dispenser system **100** within a turret assembly **310.** The turret assembly **310** may be fixedly attached to the dispenser frame **305.** As is shown in Fig. 3, the turret assembly **310** may include a turret plate **320** positioned within a turret frame **325.** The turret frame **325** may be made out of stainless steel, aluminum, other types of conventional metals, or similar types of substantially noncorrosive materials. The turret plate **320** may be substantially circular. The turret plate **320** may include a number of pod apertures **330.** The pod apertures **330** may be sized to accommodate the pod cartridges **210.** The turret plate **320** may spin about a turret pin **340.** A turret motor **350** may drive the turret assembly **310.** The turret motor **350** may be a conventional AC motor or a similar type of device. The turret motor **350** may drive the turret assembly **310** at about six (6) to about thirty (30) rpm, with about twenty-five (25) rpm preferred.

The turret plate **320** also may have a number of detents **360** positioned about its periphery. The detents **360** may be positioned about each of the turret apertures **330.** The detents **360** may cooperate with one or more limit switches **365** so as to control the rotation of the turret plate 320. The rotation of the plate **320** may be stopped when the limit switch 360 encounters one of the detents **360.**

Positioned adjacent to the turret assembly **310** may be an injector assembly **400.** The injector assembly **310** may be fixedly attached to the dispenser frame **305.** The injector assembly **400** also may include an injector frame **410** extending above the turret assembly **310.** The injector frame **410** may be made out of stainless steel, other types of metals, or similar types of substantially noncorrosive materials.

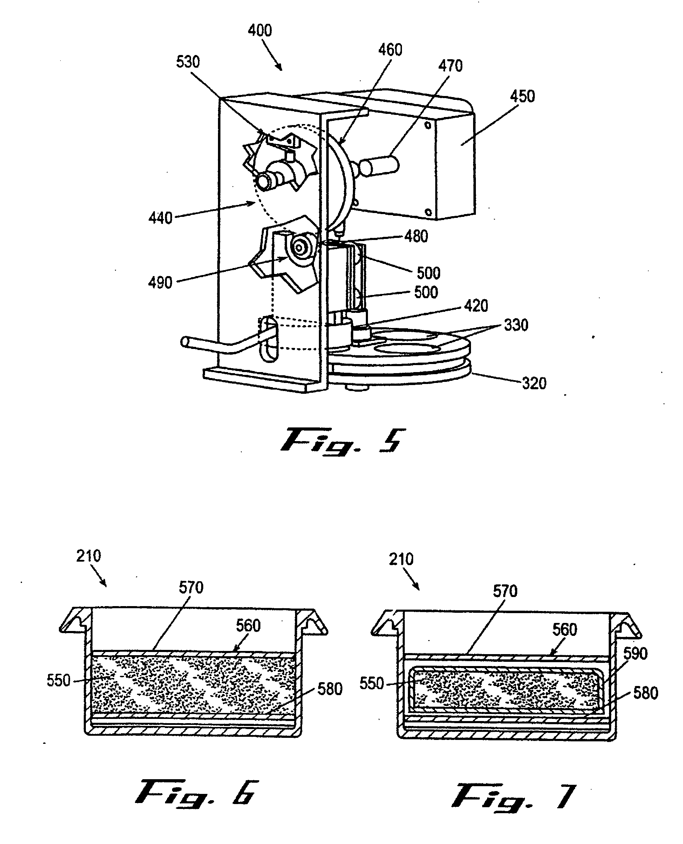

As is shown in Figs. **4** and **5**, the injector assembly **400** may include the injection nozzle **200** as described above. The injection nozzle **200** may have a narrow tip so as to penetrate the pod cartridge **210** if needed or a wide mouth to accommodate the entire pod cartridge **210.** The injector assembly **400** may include an injector head **420** that cooperates with the injection nozzle **200.** The injector head **420** may be slightly larger in diameter than the pod cartridges **210.** The injector head **420** also may be made out of stainless steel, plastics, or similar types of substantially noncorrosive materials. The injector head **420** may include a sealing ring **430** positioned about its lower periphery. The sealing ring **430** may be made out of rubber, silicone, or other types of elastic materials such that a substantially water tight seal may be formed between the injector head **420** and the pod cartridge **210.** The heat exchanger **150** may be in communication with the injector head **420** so as to provide hot, pressurized water to the pod cartridges **210.**

The injector head **420** may be moveable in a substantially vertical plane via a cam system **440.** (The terms "vertical" and "horizontal" are used as a frame of reference as opposed to absolute positions. The injector head **420** and the other elements described herein may operate in any orientation.) A cam system drive motor **450** may drive the cam system **440.** The drive motor **450** may be a conventional AC motor similar to the turret motor **350** described above. The drive motor **450** also may be a shaded pole or a DC type motor. The drive motor **450** may rotate an eccentric cam **460** via a drive belt system **470.** The drive motor **450** and the gear system **470** may rotate the eccentric cam **460** at about six (6) to about thirty (30) rpm, with about twenty-five (25) rpm preferred. The eccentric cam **460** may be shaped such that its lower position may have a radius of about 4.1 to about 4.8 centimeters (about 1.6 to 1.9 inches) while its upper position may have a radius of about 3.5 to 4.1 centimeters (about 1.3 to about 1.7 inches).

The eccentric cam **460** may cooperate with an idler wheel **480.** The idler wheel **480** may be in communication with and mounted within a support plate **490.** The support plate **490** may maneuver about the injector frame **410.** The support plate **490** may be made out of stainless steel, other types of steel, plastics, or other materials. The support plate **490** may be fixedly attached to the injector head **420.** The support plate **490** may have a number of guide wheels **500** positioned thereon such that the support plate **490** can move in the vertical direction within the injector frame **410.** A return spring **520** also may be attached to the support plate and the injector frame **410.** A limit switch **530** may be positioned about the cam **460** such that its rotation may not exceed a certain amount.

The injector head **420** thus may maneuver up and down in the vertical direction via the cam system **440.** Specifically, the drive motor **450** may rotate the eccentric cam **460** via the gear system **470.** As the eccentric cam **460** rotates with an ever-increasing radius, the idler wheel **480** pushes the support plate **490** downward such that the injector head **420** comes in contact with a pod cartridge **210.** The eccentric cam **460** may lower the injector head **420** by about 6.4 to about 12.7 millimeters (about one-quarter to about one-half inches). Once the injector head **420** comes into contact with the pod cartridge **210**, the eccentric cam **460** may continue to rotate and increases the pressure on the pod cartridge **210** until the cam **460** reaches the limit switch **530.** The injector head **420** may engage the pod cartridge **210** with a downward force of about 136 to 160 kilograms (about 300 to 350 pounds). The sealing ring **430** thus may form a substantially airtight and water tight seal about the pod cartridge **210.** The drive motor **450** may hold the cam **460** in place for a predetermined amount of time. The cam system **440** may then be reversed such that the injector head **420** returns to its original position.

Once the injection nozzle **200** of the injector head **420** is in contact with the pod cartridge **210**, the hot, high pressure water may flow from the heat exchanger **150** into the injector head **420**. The water may be at about 82 to about 93 degrees Celsius (about 180 to about 200 degrees Fahrenheit). The incoming water flow may be pressurized at about 11 to about 14 kilograms per square centimeter (about 160 to 200 pounds per square inch). The pressure of the water passing through the pod cartridge **210** may be about 1.4 to about 14 kilograms per square centimeter (about 20 to about 200 pounds per square inch). The pressure of the water flowing through the pod cartridge **210** may vary with the nature of the beverage.

As is shown in Figs. 6 and 7, the pod cartridges **210** may be filled with different types of grinds, leaves, or other types of a brewing or mixing material **550.** In the case of a single serving sized espresso beverage of about thirty (30) milliliters, about six (6) to about eight (8) grams of espresso grinds may be placed in the pod cartridge 210. Likewise, about six (6) to about (8) grams of coffee grinds may be added to the pod cartridge **210** to produce about a 240 milliliter (about eight (8) ounce) cup of coffee. About three (3) to about five (5) grams of tealeaves may be added to the pod cartridge **210** in order to make about a 150 milliliter (about five (5) ounce) cup of tea. The amount of the brewing material **550** may be varied as desired.

The brewing material **550** may be positioned within one or more layers of filter paper **560.** The filter paper **560** may be standard filter paper used to collect the brewing material **550** while allowing the beverage to pass therethrough. The pod cartridge may have an upper filter layer **570** and a lower filter layer **580.** The brewing material **550** itself may be positioned directly between the upper and lower filter layers **570, 580.** Alternatively, the brewing material **550** may be placed within a foil envelope **590.** The foil envelope **590** may serve to keep the brewing material **550** therein fresh and out of contact with the ambient air. Alternatively, the entire pod cartridge **210** may be placed within a foil envelope, either individually or as a group, until the pod **210** is ready for use. The use of the foil envelope **590** is not required.

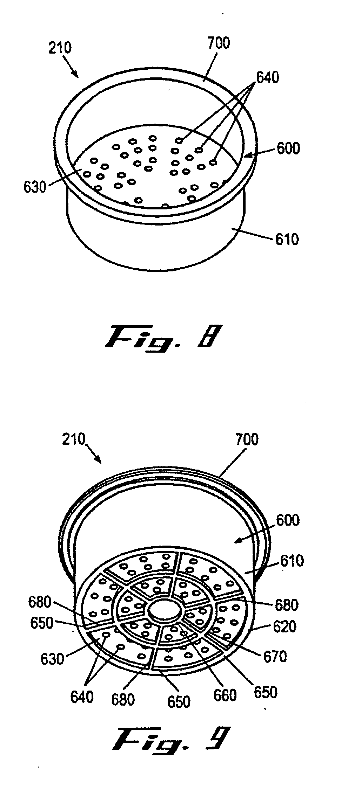

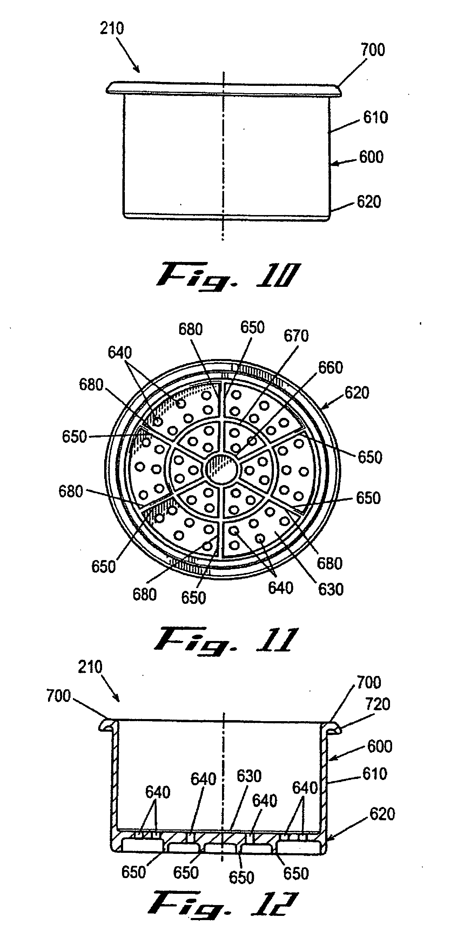

Figs. 8-12 show an embodiment of the pod cartridge **210** that may be used with the beverage dispenser system **100** or in other types of beverage systems. The pod cartridge **210** may be substantially in the shape of a cup **600.** The cup **600** may be made out of a conventional thermoplastic such as polystyrene, polyethylene, or polypropylene. Alternatively, stainless steel or other types of substantially non-corrosive materials also may be used. The cup **600** may be substantially rigid.

The cup **600** may include a substantially circular sidewall **610** and a substantially flat base **620.** The sidewall **610** and the base **620** of the cup **600** may be molded and form a unitary element or a separate sidewall **610** and a separate base **620** may be fixedly attached to each other. The sidewall **610** and the base **620,** as well as the cup **600** as a whole, may have any convenient diameter so as to accommodate the pod apertures **330** of the turret plate **320** of the turret assembly **310** and the injector head **420** of the injector assembly **400.** Alternatively, the sidewall **610** and the base **620** of the cup 600 may have any convenient diameter so as to accommodate any other type of beverage dispenser system **100.**

The sidewall **610** of the cup **600** may have any convenient depth so as to accommodate an appropriate amount of the brewing material **550.** In this embodiment, the sidewall **610** may have an inside diameter of about 3.9 centimeters (about 1.535 inches), an outside diameter of about 4.03 centimeters (about 1.586 inches) and a wall thickness of about 1.295 millimeters (about 0.051 inches). The sidewall **610** also may have a depth of about 2.43 centimeters (about 0.955 inches) with the base **620** having an additional depth of about 0.318 centimeter (about 0.125 inches). Such a configuration of the sidewall **610** and the base **620** of the cup **600** may hold about six (6) to about sixteen (16) grams of the brewing material **550,** depending upon the size of the desired beverage, i.e., eight (8), twelve (12), or sixteen (16) ounces. These dimensions are for purposes of example only. The sidewall **610** and the base **620** of the cup **600** may take any desired or convenient size or shape. For example, the sidewall **610** may be straight, tapered, stepped, or curved if desired.

The base **620** also may include a bottom floor **630.** The bottom floor 630 may include a number of apertures **640** formed therein. The apertures **640** may extend through the width of the floor **630.** In this embodiment, the apertures **640** may be largely circular in shape with a diameter of about 1.6 millimeters (about 0.066 inches). Any desired shape or size, however, may be used. In this embodiment, about 54 apertures **640** are used herein, although any number may be used. The base **620** also may include a number of support ribs **650** supporting the floor **630.** An inner circular rib **660,** an outer circular rib **670,** and a number of radial ribs **680** may be used. Any design or number of ribs **660** may be used. In this embodiment, the ribs **650** may have a depth of about 2.54 millimeters (about 0.1 inch) and the floor **630** may have a depth of about 1.78 millimeters (about 0.07 inches), although any desired thickness may be used.

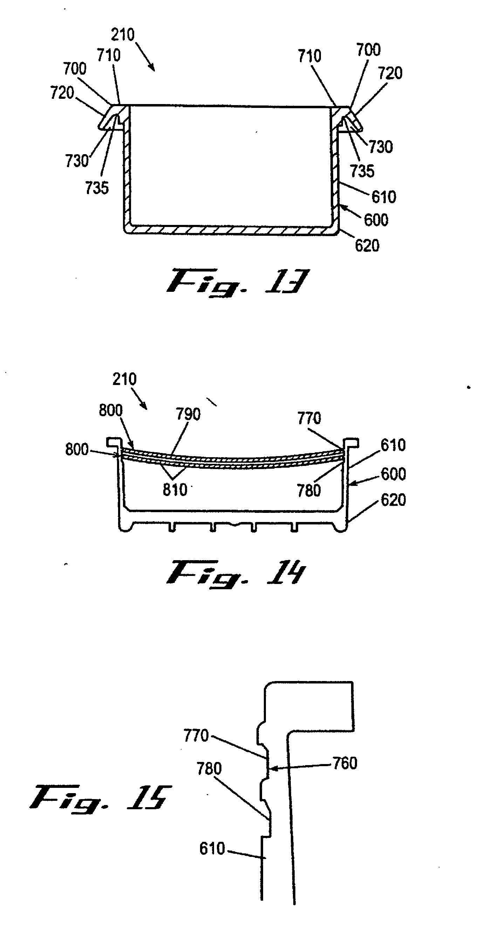

The sidewall **610** of the cup **600** also may include an upper lip **700.** The upper lip **700** may include a substantially flat top portion **710** and a downwardly angled flange **720** extending from the top portion **710.** The flange **720** may extend downwardly so as to form a pocket **730** with the sidewall **610.** The top of the pocket **730** may form a curved inner radius **735.** As is shown in Fig. 13, the sidewall **610** may or may not include an outer step **740** within the pocket **730.**

In this embodiment and by way of example only, the flat top portion **710** of the upper lip **700** may have width of about 2.54 millimeters (about 0.1 inch) extending in the vertical direction. The flange **720** may have the length of about 2.2 millimeters (about 0.087 inch). The flange **720** and the pocket **730** of the lip **700** are sized to accommodate the size of the pod apertures **330.** Specifically, the lip **700** is configured to accommodate the size of the pod apertures **330** and the expected force of the injector head **420** while using as little material as possible.

Figs. 14 and 15 show a further embodiment of the cup **600.** In this embodiment, the sidewall **610** of the cup **600** may include a number of over-cuts **760** formed therein. In this embodiment, a first over-cut **770** and a second over-cut **780** may be used. Any number of over-cuts **760,** however, may be used. The over-cuts **760** may be continuous around the inner circumference of the side wall **610** or the over-cuts **760** may be intermittent. The over-cut **760** may cooperate with a lid **790.** The lid **790** may have edges **800** that are substantially wedge shaped to fit and remain within the over-cut **760.** The use of the wedge shaped edge **800** ensures that the lid **790** remains in place. The edges **800** may be continuous or intermittent so as to mate with the over-cut **760.** The lid **790** preferably is bowed inward or largely concave in shape.

The lid **790** may be placed in the first or second over cut **770, 780** depending upon the amount of brewing material **550** that is desired to be placed within the cup **600.** The lid **790** is bowed downward so as to tamp the brewing material **550** down under pressure and to keep the brewing material **550** therein from shifting. The lid **790** may compact the brewing material **550** with at least about nine (9) kilograms of compressive force (about twenty (20) pounds of force). The lid **790** also may have a number of apertures **810** therein so as to permit water from the injector head **420** to pass therethrough. Depending on the nature of the injector head **420,** the use of the lid **790** may not be necessary. Instead, a foil wrapper or any other covering may be used. Likewise, the over-cuts **760** also may be eliminated or modified as desired.

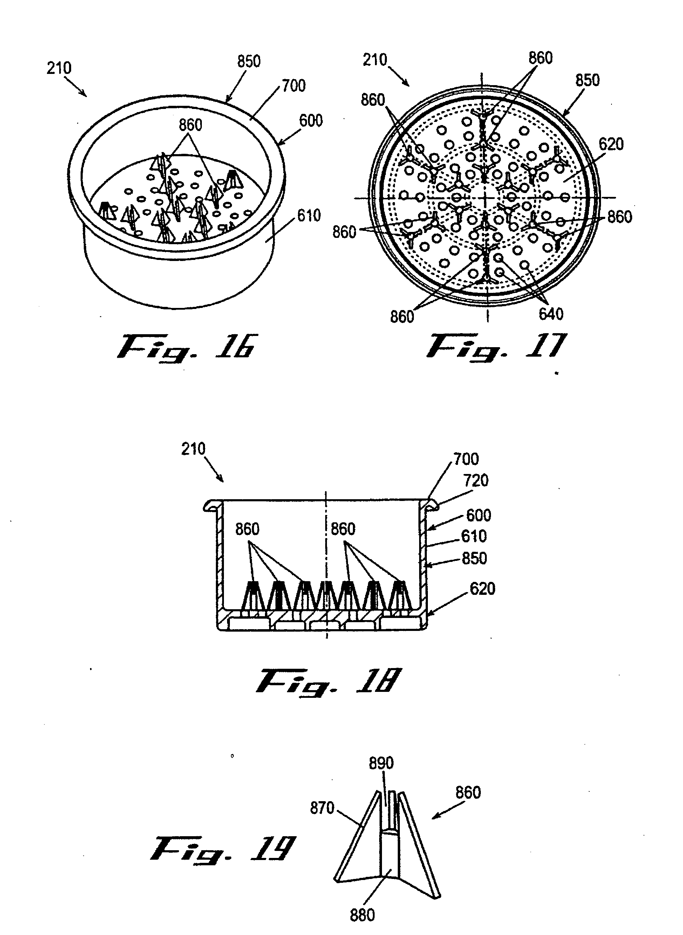

Figs. 16-19 show a spiked pod **850.** The spiked pod **850** may use the cup 600, the side wall **610,** the base **620,** the lip **700,** and the elements thereof as described above with the pod cartridge **210.** The spiked pod **850** also may include a number of spikes **860** positioned along the floor **630** of the base **620.** The spikes **860** may serve to puncture the lower layer **580** of filter paper or a package for the brewing material **550** as will be described in more detail below. In this embodiment, about eighteen (18) spikes **860** may be used. Any desired number of spikes, however, **860** may be used. The spikes **860** may be aligned along the radial ribs **680** of the base **620** or elsewhere along the floor **630.**

As is shown in, for example, Fig. 19, the spikes **860** may include three (3) triangular blades **870** surrounding a base **880.** The tips of the blades **870** may form a puncture area **890.** The blades **860** may have any desired shape. The blades **870** may have a height of about 6.35 millimeters (about 0.25 inch) and the base **880** may have a height of about 3.8 millimeters (about 0.15 inches) such that the puncture area **890** may be about 2.54 millimeters (about 0.1 inches) in length above the base **880.** Any desired size, however, may be used.

In use, the lower layer **580** of filter paper may be placed with the cup 600 of the pod cartridge **210.** The lower layer **580** may be positioned along the floor **630** of the base **620.** An amount of the brewing material **550** then may be positioned therein. The upper layer **570** of the filter paper then may be placed on the brewing material **550** if desired. The lid **790** then may be placed within the cup **600** so as to tap down the brewing material **550.** Once the lid **790** has compacted the brewing material **550,** the edge **800** of the lid **790** is positioned within the appropriate over-cut **760** within the side wall **610** of the cup **600.** The pod **210** then may be sealed or otherwise shipped for use with the beverage dispenser system **100** or otherwise.

The pod **210** may be positioned within one of the pod apertures **330** in the turret assembly **310.** Specifically, the outer edge of the pod aperture **330** aligns with the flange **720** of the lip **700** of the cup **600.** A pod or other device with a convention square lip would extend too far out of the pod aperture **330** to function with the injection head **420** of the injector assembly **310.** The injector head **420** then may be positioned about the pod **210.** The sealing ring **630** of the injector head **420** may seal about the top portion **710** of the lip **700** of the cup **600.** The use of a rounded lip or a lip with a non-flat shape may cause damage to the sealing ring **430** given the amount of pressure involved, i.e., as described above, the injector head **420** may engage the pod cartridge **210** with a downward force of about 136 to about 160 kilograms of force (about 300 to about 350 pounds) and the incoming water flow may be pressurized at about eleven (11) to about fourteen (14) kilograms per square centimeter (about 160 to 200 pounds per square inch (psi)). The pressure of the water flowing through pod cartridge **210** may vary with the nature of the brewing material **550** from about 1.4 to about 14 kilograms per square centimeter (about twenty (20) to about 200 pounds per square inch).

The water passing through the injection head **420** may spread out over the lid **790** and the apertures **810** thereof and into the brewing material **550.** The brewed beverage may then pass through the apertures **640** in the base **620** of the cup **600.**

The lip **700** as well as the base **620** of the cup **600** are designed to use as little material as possible while being able to withstand the water pressures described above with out substantial deformation. The cup **600** as a whole may have about five (5) to about eight (8) grams of plastic material therein when using, for example, polypropylene homopolymer. The configuration of the lip **700** may save about 0.4 to about 0.6 grams or about ten percent (10%) of the plastic required.

In the embodiment of the spiked pod **850,** the brewing material **550** and the lower filter layer **580** may be placed within the cup **600.** The injection nozzle **200** may penetrate the foil envelope **590** if used or water may otherwise flow into the cup 600 with the water pressure described above. This water pressure may force both the lower filer layer **580** against the spikes **860** of the spiked pod **850** so as to allow these spikes **860** to penetrate the lower filter layer **580.** The punctures caused by the spikes 860 may allow the brewed beverage to pass therethrough while substantially maintaining the remaining brewing material **550** therein. The brewing material **590** also may be contained within other types of structures, such as the foil envelope **590,** that may be penetrated by the spikes **860.**

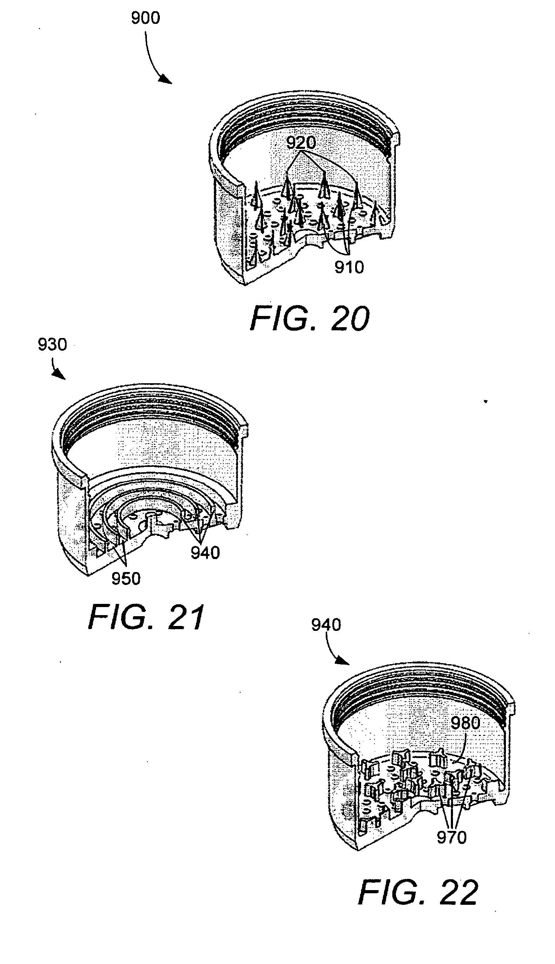

Fig. 20 shows an embodiment of the present invention, a spiked pod **900.** The spiked pod **900** is similar to the spiked pod **850** described above. The spiked pod **900** may use the cup **600**, the side wall **610,** the base **620,** the apertures **640**, the lip **700**, and the elements thereof as described above with the pod cartridge **210.** The spiked pod 900 also includes a number of spikes **910** positioned along the floor **630** of the base **620.** In this embodiment, about 15 to about 35 spikes **910** may be used, although any desire number may be used herein. The spikes **910** may have a height of about 5.1 to about 8.9 millimeters (about 0.200 to about 0.350 inches) or any desired height.

The spiked pod **900** is intended to facilitate the brewing of certain gummy or tacky materials such as Chai tea by creating more definite flow paths that are not susceptible to clogging. About four (4) to about seven (7) grams of the tacky material may be used. The spikes **910** may be somewhat sharper than those described above so as to pierce the lower filter layer **580** and create annular orifices between the filter paper **580** and the spikes **910.** The spikes **910** have a top point **920** that extends at an angle of about three (3) to about fifteen (15) degrees or more. The angle may vary as desired. Specifically, the spikes **910** may extend into the brewing or mixing material **550** (in this case the gummy or tacky tea material) and in effect create a three-dimensional filter. The spikes **910** extend into the brewing material **550** so as to provide a boundary layer situation where the brewing material **550** seals on the spikes **910** yet the beverage can wick down the spikes **910** unobstructed by the gummy nature of the brewing material **550** therein. The spikes **910** thus pierce the filter paper **580** cleanly, so that the filter paper **580** seals on the spikes **910** so as to create a tight seal sufficient enough to prevent the brewing material **550** from penetrating therethrough. The filter paper **580** provides both a conventional form of filtration as the water passes therethrough and a unique form of creating vertical flow paths. The spiked pod 900 is intended to be used without a foil envelope **590,** although one may be used if desired.

Fig. 21 shows a further embodiment which does not form part of the present invention, a concentric ring pod **930.** As opposed to the spiked pods **850, 900** described above, the concentric circle pod **900** includes a number of concentric rings **940** positioned on the floor **630** of the base **620.** Although three (3) concentric rings **940** are shown, any number of rings **940** may be used as may be desired. The concentric rings **940** may have a height of about 0.8 to about 3.2 millimeters (about 0.030 to about 0.125 inches) or any desired height. Because of the natural crowning of the floor **630** due to cooling as well as the desire to provide a good seal on the outermost rings **940,** the height may vary radially, with the inner rings **940** being shorter. The concentric rings **940** separate the filter paper **580** from the base **620** so as to increase the flow area from that of the apertures **640** alone. Specifically, the flow area increases from about 54 holes with diameters of about 1.6 millimeters (1/16^{th} inch) each or about 1.1 square centimeters (about 0.166 square inches) to about 38.1 millimeters in diameter (about 1.5 inch) or about 11.4 square centimeters (about 1.7671 square inches), an increase of about 1,066 percent. The concentric rings **940** also provide separate flow segments or mixing areas **950** so as to reduce the chance of channeling where more water would flow through the same flow path to the same apertures **640.**

Fig. 22 shows a further embodiment which does not form part of the present invention, a platform pod **960.** Instead of the spikes **910** of the spiked pod **900** or the concentric rings **940** in the concentric ring pod **930,** the platform pod **960** includes a number of platforms **970** positioned on the floor **630** and the base **620.** As is shown, the platforms **970** may be somewhat triangular in shape, although any desire shape may be used. About 15 to about 35 platforms **970** may be used herein, although any desired number may be used. The platforms **970** may have a height of about 2.0 to about 3.2 millimeters (about 0.080 to 0.125 inches) or any desired height. The supports **980** support the filter paper **580** for the purpose of increasing the flow therethrough by defining a mixing area **980** above the apertures **640.**

## Claims

1. A pod (850, 900) for mixing an amount of a tacky material and water, comprising:
a sidewall (610); and
a base (620) positioned about the sidewall;
wherein the base comprises a plurality of apertures (640) and a plurality of spikes (860, 910); and
wherein the plurality of spikes comprises a top point of about three (3) to about fifteen (15) degrees.

2. A pod(850, 900) as claimed in claim 1, wherein the plurality of spikes (860, 910) comprises 15 to 35 spikes.

3. A pod (850, 900) as claimed in claim 1 or 2, wherein the plurality of spikes (860, 910) comprises a height of about 5.1 to about 8.9 millimeters (about 0.2 to about 0.35 inches).

4. A pod (850, 900) as claimed in claim 1, 2 or 3, further comprising a layer of filter paper (580) positioned about the plurality of spikes (860, 910) such that the plurality of spikes puncture the layer of filter paper without letting the tacky material therethrough.

## Patentansprüche

1. Halter (850, 900) zum Mischen einer Menge eines klebrigen Materials und Wasser mit
einer Seitenwand (610) und
einer Basis (620), die um die Seitenwand positioniert ist,
wobei die Basis mehrere Öffnungen (640) und mehrere Stacheln (860, 910) umfasst und
wobei die mehreren Stacheln eine obere Spitze von ungefähr drei (3) bis ungefähr fünfzehn (15) Grad umfassen.

2. Halter (850, 900) nach Anspruch 1, wobei die mehreren Stacheln (860, 910) 15 bis 35 Stacheln umfassen.

3. Halter (850, 900) nach Anspruch 1 oder 2, wobei die mehreren Stacheln (860, 910) ungefähr 5,1 bis ungefähr 8,9 Millimeter (ungefähr 0,2 Zoll bis ungefähr 0,35 Zoll) hoch sind.

4. Halter (850, 900) nach Anspruch 1, 2 oder 3, ferner mit einer Lage Filterpapier (580), die um die mehreren Stacheln (860, 910) positioniert ist, so dass die mehreren Stacheln die Filterpapierlage durchstoßen, ohne das klebrige Material hindurchzulassen.

## Revendications

1. Dosette (850, 900) pour mélanger une quantité de matière collante et d'eau, comprenant :
une paroi latérale (610) ; et
une base (620) positionnée autour de la paroi latérale ;
la base comprenant une pluralité d'ouverture (640) et une pluralité de pointes (860, 910) ; et
la pluralité de pointes comprenant un point supérieur d'environ trois (3) à environ quinze (15) degrés.

2. Dosette (850, 900) selon la revendication 1, dans laquelle la pluralité de pointes (860, 910) comprend 15 à 35 pointes.

3. Dosette (850, 900) selon la revendication 1 ou 2, dans laquelle la pluralité de pointes (860, 910) comprend une hauteur d'environ 5,1 à environ 8,9 millimètres (environ 0,2 à environ 0,35 pouce).

4. Dosette (850, 900) selon la revendication 1, 2 ou 3, comprenant en outre une couche de papier filtre (580) positionnée autour de la pluralité de pointes (860, 910) de telle sorte que la pluralité de pointes perce la couche de papier filtre sans laisser passer la matière collante.
